Europäisches Patentamt

European Patent Office

Office européen des brevets

(11) Veröffentlichungsnummer: **0 090 180**
A1

# EUROPÄISCHE PATENTANMELDUNG

(21) Anmeldenummer: 83101845.2

(22) Anmeldetag: 25.02.83

(51) Int. Cl.³: **B 41 F 31/04**

(30) Priorität: 26.03.82 DE 3211156

(43) Veröffentlichungstag der Anmeldung: 05.10.83
Patentblatt 83/40

(84) Benannte Vertragsstaaten: **AT CH DE FR GB IT LI NL SE**

(71) Anmelder: **M.A.N.-ROLAND Druckmaschinen
Aktiengesellschaft, Christian-Pless-Strasse 6-30,
D-6050 Offenbach/Main (DE)**

(72) Erfinder: **Galster, Hans-Peter, Ratleikstrasse 8b,
D-6453 Seligenstadt (DE)**
Erfinder: **Despot, Janko, Rhönstrasse 80,
D-6050 Offenbach/Main (DE)**

(74) Vertreter: **Marek, Joachim, Dipl.-Ing., c/o
M.A.N.-ROLAND Druckmaschinen A.G. Borsigstrasse 19,
D-6052 Mühlheim/Main (DE)**

(54) Farbdosiereinrichtung.

(57) Eine Farbdosiereinrichtung zum Erzeugen eines Farbprofils auf der Farbkastenwalze einer Druckmaschine ist mit einzeln verstellbaren Farbschiebern (1) ausgerüstet. Zur Justierung der Farbschieber gegenüber der Farbkastenwalze (3) ist in den Antrieben zum Verstellen der Farbschieber jeweils eine Rutschkupplung (6) vorgesehen. Der maximale Verstellweg der Farbschieber soll größer sein als der durch die Einbaumaße mögliche Hub. Zum Justieren der Farbschieber an der Farbkastenwalze werden diese bis zur maximal möglichen Verstellung angestellt, wobei die Rutschkupplung die Differenz des Verstellwegs ausgleicht und die nun justierte Stellung an einem Potentiometer abprüfbar ist.

ACTORUM AG

0090180

Die Erfindung betrifft eine Vorrichtung entsprechend dem Oberbegriff des ersten Patentanspruchs.

Farbdosierelemente, welche mit ihrer Vorderkante gegenüber einer Farbkastenwalze anstellbar sind und eine Dosierkante bilden sind z.B. durch DE-PS 2 629 331 bekannt geworden. Bei diesen Vorrichtungen wurden die einzelnen Farbdosierelemente elektromotorisch ferngesteuert verstellt und auch eingestellt. Um eine exakte Einstellung zu erreichen, werden die einzelnen Farbdosierelemente jedes für sich montiert und exakt zur Farbkastenwalze ausgerichtet. Hierzu ist es besonders wichtig, daß die Dosierkanten der einzelnen Farbdosierelemente über ihre ganze Länge an der Farbkastenwalze anligen, damit in Dosierzonen in denen keine Farbe benötigt wird, auch die Farbe auf der Farbkastenwalze komplett abrakelbar ist. In dieser Stellung werden nun die Führungselemente mit dem Farbkastengrundkörper fest verbunden. Um einen möglichst großen Dosierbereich zu erhalten, werden die Farbdosierelemente bei maximalem Hub der Antriebseinrichtung ausgerichtet und montiert.

Es kann nun vorkommen, daß einzelne Farbdosierelemente öfter eine Rakelfunktion haben und dadurch an der Farbkastenwalze anliegen müssen. In diesem Fall wirkt die Farbkastenwalze gegenüber dem einzelnen Farbdosierelement im weitesten Sinne wie eine Schleifscheibe. Dieser Schleifeffekt rührt aus der Bearbeitung der Farbkastenwalze, da auch geschliffene Oberflächen im gewissen Sinne noch scharfe Kanten aufweisen, die durch die einzelnen Schleifkörner der Schleifscheibe hervorgerufen werden. Durch diesen Schleifeffekt nützen sich die Dosierkanten von angestellten Farbdosierelementen ab und eine einwandfreie Rakelfunktion ist nicht mehr gewährleistet, d.h. die Farbdosiereinrichtung ist nicht mehr voll funktionsfähig. Wenn dieser Fall einmal eingetreten ist, so muß der Farbkasten demontiert werden und die einzelnen Farbdosierelemente müssen neu justiert werden.

Derartige Arbeiten sind jedoch sehr zeit- und kostenaufwendig, wodurch ein erheblicher Kostenanfall bezüglich Arbeitslohn und Produktionsausfall entsteht.

Um derartige Nachteile ausschalten zu können, liegt der Erfindung die Aufgabe zugrunde, eine Vorrichtung zu schaffen, die eine einfache Eichung der Farbdosierelemente gestattet, ohne daß Montagearbeit anfällt bzw. Produktionsausfall entsteht.

Gelöst wird diese Aufgabe durch den kennzeichnenden Teil des ersten Patentanspruchs.

Der Vorteil dieser Vorrichtung besteht darin, daß in kürzester Zeit die einzelnen Farbdosierelemente gegenüber der Farbkastenwalze justierbar sind, ohne daß Montagearbeit anfällt. Weiterhin ist es mit dieser Vorrichtung möglich, zu jeder Zeit eine Eichung durchzuführen. Dies ist besonders bei Druckbeginn einer Auflage von Vorteil, denn es kann damit die Gewähr dafür übernommen werden, daß die eingestellten Spaltbreiten nach dem Justieren auch den tatsächlichen Spaltbreiten entsprechen. Dies trifft auch für die Reproduzierbarkeit der Farbdosierelementstellung bei Wiederholaufträgen zu, wenn diese in einem relativ langen Zeitabstand folgen.

Nachfolgend ist an einem Ausführungsbeispiel die Erfindung näher erläutert.

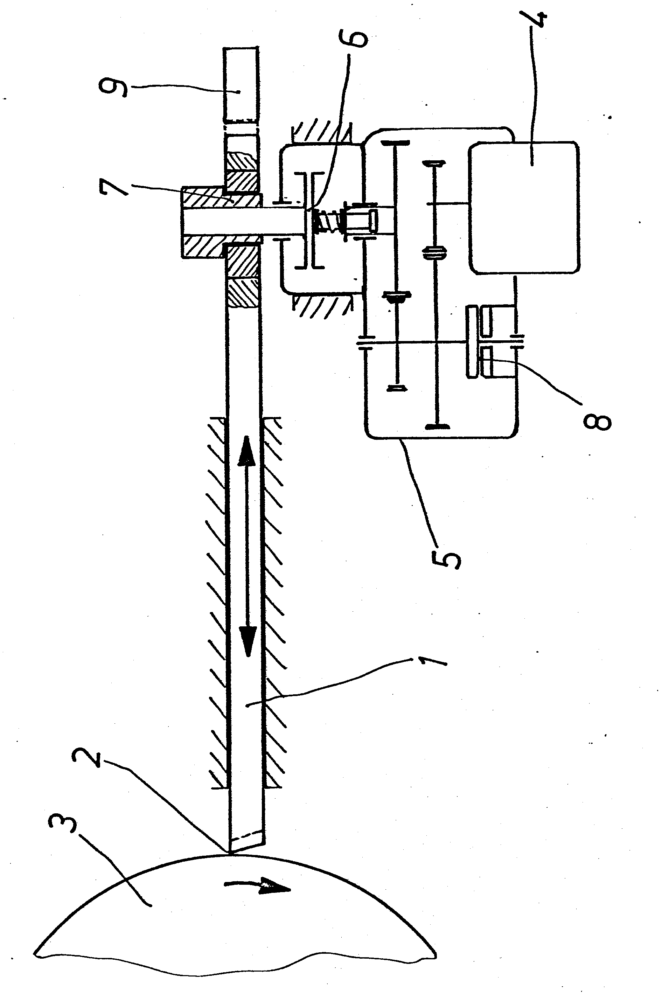

Die Figur zeigt den schematischen Aufbau der Erfindung.

Das Farbdosierelement 1 wird je nach benötigter Farbmenge mit seiner Dosierkante 2 in einem definierten Abstand zur Farbkastenwalze 3 positioniert. Durch die Rotation der Farbkastenwalze 3 und dem zwischen ihr und dem Farbdosierelement 1 bestehenden Spalt wird eine definierte Farbschichtdicke auf der Farbkastenwalze 1 erzeugt. Die Verstellung des Farbdosierelements 1 erfolgt über einen Elektromotor 4, ein Getriebe 5 und eine Rutschkupplung 6 auf einen Stellexzenter 7 am Farbdosierelement 1. Für das exakte positionieren des Farbdosierelementes ist ein Stellpotentiometer 8 mit einer Welle des Getriebes 5 gekoppelt. Somit entspricht jede Stellung des Farbdosierelements 1 einem bestimmten Widerstandswert des Potentiometers 8. Mit einer an diesem Potentiometer 8 angelegten Spannung und einer entsprechenden Elektronik läßt sich dann der Motor 4 so ansteuern, daß das Farbdosierelement 1 exakt positionierbar ist.

Zum Eichen der Farbdosierelemente 1 wird wie folgt vorgegangen. Das Potentiometer 8 besitzt als Arbeitsbereich einen Winkelbereich von ca. 270$^{o}$, das entspricht ca. 180$^{o}$

Schwenkwinkel des Stellexzenters 7. Benötigt werden jedoch für den maximalen Dosierspalt ca. 160° Schwenkwinkel des Stellexzenters 7 für den Hub des Farbdosierelements 1, so daß am Anfang und Ende des Arbeitsbereiches ein gewisser Überhub besteht. Dieser Überhub wird zum Justieren benutzt indem man die Farbdosierelemente 1 gegen einen hinteren Anschlag 9 fährt. Dieser Anschlag 9 wird bei ca. 260° Drehwinkel des Potentiometers 8 erreicht, so daß das Farbdosierelement 1 am Anschlag 9 anliegt, während der Motor 4 und das Getriebe 5 weiterlaufen, wobei die Rutschkupplung 6 durchrutscht, bis 270° Drehwinkel des Potentiometers 8. Anschließend werden alle Farbdosierelemente 1 gegen die Farbkastenwalze 3 gefahren. Diese wird bei ca. 10° Drehwinkel des Potentiometers 8 erreicht. Auch hier rutscht die Rutschkupplung 6 und das Getriebe 5 und der Motor 4 läuft bis 0° Drehwinkel des Potentiometers 8. Hierdurch ist gewährleistet, daß alle Farbdosierelemente 1 an der Farbkastenwalze 3 anleigen. Beim erneuten Dosieren ist gewährleistet, daß alle eingestellten Spaltbreiten exakt dem vorgegebenen Wert entsprechen, ohne das sich eine Abnutzung der Dosierkante 2 bemerkbar machen kann.

0090180

M. A. N. - ROLAND Druckmaschinen Aktiengesellschaft
Christian-Pleß-Str. 6-30, 6050 Offenbach am Main

Farbdosiereinrichtung

## Patentansprüche

1.) Farbdosiereinrichtung zum Erzeugen eines definierten Farbprofils auf einer Farbkastenwalze mittels einzelner unabhängig voneinander bewegbarer Farbdosierelemente, welche fernsteuerbar elektromotorisch antreibbar sind, wobei ein Motor und ein Untersetzungsgetriebe vorgesehen ist, dessen Abtrieb mit einem die Verstellung des Farbdosierelements bewirkendem Exzenter oder dgl. versehen ist,
d a d u r c h   g e k e n n z e i c h n e t ,
daß zwischen der letzten Stufe des Getriebes (5) und dem Stellexzenter (7) eine Rutschkupplung vorgesehen ist und der max. theoretische Hub des Farbdosierelements größer ist als der durch die Farbkastenwalze (3) und den Anschlag (9) begrenzte tatsächliche Hub des Farbdosierelements.

2.) Farbdosiereinrichtung nach Anspruch 1,
d a d u r c h   g e k e n n z e i c h n e t ,
daß einer Welle des Getriebes (5) ein Potentiometer (8) zugeordnet ist.

- 2 -

3.) Farbdosiereinrichtung nach Anspruch 1 und 2, d a d u r c h   g e k e n n z e i c h n e t, daß jedem Widerstandswert des Potentiometers eine bestimmte Stellung des Farbdosierelements (1) zugeordnet werden kann.

4.) Farbdosiereinrichtung nach Anspruch 1 - 3, d a d u r c h   g e k e n n z e i c h n e t, daß der maximale Fahrbereich des Motors 270$^{\circ}$ Drehwinkel des Potentiometers (8) entspricht, wobei der Abstand zwischen Farbkastenwalze (3) und Anschlag (9) ca. 250$^{\circ}$ Drehwinkel des Potentiometers (8) entspricht.

1/1

0090180

Europäisches
Patentamt

**EUROPÄISCHER RECHERCHENBERICHT**

0090180

Nummer der Anmeldung

EP 83 10 1845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-A-2 629 331 (ROLAND)<br>* Seite 8, Zeilen 6-29; Figur 1 * | 1-3 | B 41 F 31/04 |
| Y | US-A-3 902 420 (ROLAND)<br>* Spalte 2, Zeilen 43-53; Spalte 6, Zeilen 44-58; Figur 1a * | 1-3 | |
| Y | US-A-2 572 554 (WORTHINGTON)<br>* Spalte 5, Zeile 1 - Spalte 6, Zeile 20; Figuren * | 1-3 | |
| Y | DE-A-3 049 289 (VEB KOMBINAT POLYGRAPH)<br>* Insgesamt * | 1-3 | |
| A | US-A-3 727 550 (EASOZ et al.)<br>* Spalte 4, Zeile 25 - Spalte 6, Zeile 4; Figuren * | 1 | RECHERCHIERTE SACHGEBIETE (Int. Cl. ³)<br><br>B 41 F |
| A | FR-A-2 131 160 (VEB POLYGRAPH)<br>* Ansprüche * | 1 | |
| A | US-A-3 730 090 (LAMBERG)<br>* Spalte 4, Zeile 50 - Spalte 5, Zeile 27; Figuren 4-7 * | 1 | |

Der vorliegende Recherchenbericht wurde für alle Patentansprüche erstellt.

| Recherchenort<br>DEN HAAG | Abschlußdatum der Recherche<br>04-07-1983 | Prüfer<br>MEULEMANS J.P. |
|---|---|---|

KATEGORIE DER GENANNTEN DOKUMENTEN
X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
 nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82